Europäisches Patentamt

European Patent Office

Office européen des brevets

(19)

(11) **EP 0 871 339 A2**

(12) **EUROPÄISCHE PATENTANMELDUNG**

(43) Veröffentlichungstag:
**14.10.1998 Patentblatt 1998/42**

(51) Int. Cl.$^6$: **H04Q 7/34**, G01S 5/04

(21) Anmeldenummer: 98106433.0

(22) Anmeldetag: **08.04.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.04.1997 DE 19714743**

(71) Anmelder:
**DeTeMobil**
**Deutsche Telekom MobilNet GmbH**
**53227 Bonn (DE)**

(72) Erfinder:
- **Raush, Henrik**
  **53229 Bonn (DE)**
- **Smolka, Peter**
  **53225 Bonn (DE)**

(54) **Verfahren zur räumlichen Zuordnung von Qualitätsparametern in digitalen Mobilfunksystemen**

(57) Die Erfindung betrifft ein Verfahren zur räumlichen Zuordnung von Qualitätsparametern in digitalen Mobilkommunikationssystemen und eine Einrichtung zur Durchführung des Verfahrens.

Das Verfahren beruht darauf, daß mittels einer geeigneten Einrichtung die in einer Funkverbindung zwischen Mobilendgeräten und Basisstationen übermittelten Signalsisierungsprotokolle erfasst werden, und zeitgleich mit der Erfassung der Meßdaten und Signalisierungsprotokolle die Standorte der beteiligten Mobilendgeräte durch Peilung im Uplinkfrequenzband ermittelt werden, wobei die Peilergebnisse zusammen mit dem Zeitpunkt der Peilungen erfasst werden, so daß jedem erfassten Signalisierungsprotokoll das entsprechende, zeitgleich ermittelte Peilergebnis zugeordnet, und danach eine quantitative und qualitative Auswertung der erfassten Daten erfolgen kann.

Damit sind wesentlich genauere und komplexere Qualitätsanalysen möglich als bei bisherigen Verfahren.

EP 0 871 339 A2

**Beschreibung**

Die Erfindung betrifft ein Verfahren und eine Einrichtung zur räumlichen Zuordnung von Qualitätsparametern in digitalen Mobilkommunikationssystemen nach dem Oberbegriff des Patentanspruchs 1.

Zur Qualitätsbestimmung und Optimierung digitaler Mobilkommunikationsnetze werden einerseits die bei Meßfahrten gewonnenen Daten der Funkschnittstelle ausgewertet und andererseits die auf den Schnittstellen der stationären Netzelemente abgreifbaren Signalisierungsprotokolle auf Unregelmäßigkeiten und Auffälligkeiten überprüft. Daraus ergeben sich unter anderem zwei wesentliche Problemstellungen:

1. Bei Meßfahrten können zwar Stellen schlechter Versorgungsqualität örtlich genau zugeordnet werden, aber es ist ein erheblicher Aufwand damit verbundenen, flächendeckend innerhalb des Versorgungsgebietes einer gestörten Zelle nach Stellen schlechter Übertragungsqualität zu suchen. Die Anzahl der erzielbaren Meßergebnisse und die statistische Sicherheit solcher Meßergebnisse ist relativ gering.

2. Bei der Auswertung der Schnittstellendaten der festen Netzelemente können auffällige Funkzellen erkannt und die obigen Meßfahrten veranlaßt werden. Eine örtliche Zuordnung der auf diese Weise ermittelten Fehlerquellen muß empirisch erfolgen. Eine Beseitigung einer mutmaßlichen Störung sollte dann in einer Verbesserung der Schnittstellendaten sichtbar werden.

Die Kombination der beiden Verfahren ist der derzeit wichtigste Optimierungsansatz. Dieses Optimierungsverfahren ist jedoch sehr aufwendig, da immer wieder anhand der Schnittstellenanalysen kontrolliert werden muß, ob sich bei den durchgeführten Meßfahrten wirklich die richtigen Problemstellen gezeigt haben und diese beseitigt wurden.

Aufgabe der Erfindung ist es, ein Verfahren zur räumlichen Zuordnung von Qualitätsparametern in digitalen Mobilkommunikationssystemen und eine Einrichtung zur Durchführung des Verfahrens vorzuschlagen, welches eine einfache, flächendeckende und sichere räumliche Zuordnung von Qualitätsparametern in digitalen Mobilkommunikationsnetzen erlaubt.

Zur Lösung der Aufgabe ist die Erfindung durch die Merkmale des Anspruchs 1 bzw. 8 gekennzeichnet.

Die Grundidee besteht darin, die Mobilfunkteilnehmer in die Auffindung der Stellen schlechter Netzqualität unbemerkt einzubeziehen. Dazu werden alle Meßdaten und Signalisierungsinformationen, die ständig zur Aufrechterhaltung einer Verbindung zwischen Mobilendgerät und Basisstation übertragen werden, nicht nur quantitativ ausgewertet, sondern über eine zeitgleiche Peilung der Standorte der Mobilendgeräte mit der ermittelten Ortsinformation verknüpft.

Dies setzt ein hochauflösendes Richtungspeilverfahren voraus, welches eine Erfassung der azimutalen Energieverteilung innerhalb des zu untersuchenden Gebietes im Uplink ermöglicht. Durch genaue Peilung ist es möglich, den Standort jedes Mobilendgerätes innerhalb einer Funkzelle ausreichend exakt zu bestimmen.

Dadurch lassen sich erfindungsgemäß die zwischen einem Mobilendgerät und einer Basisstation übertragenen Daten mit den zeitgleich ermittelten Peilergebnissen verknüpfen.

Das erfindungsgemäße Verfahren lässt sich prinzipiell bei allen Mobilkommunikationsnetzen einsetzen, bei denen Signalisierungsinformation und Meßdaten an einer Schnittstelle auf der stationären Seite des Kommunikationsnetzes zugänglich sind, z.B. beim GSM-System die $A_{bis}$-Schnittstelle zwischen Basisstation (BTS: Base Tranceiver Station) und Basisstationssteuerung (BSC: Base Station Controller) oder, falls BTS und BSC örtlich zusammenfallen, die A-Schnittstelle zwischen Basisstationssystem (BSS: Base Station System) und der Mobilvermittlungsstelle (MSC: Mobile Services Switching Center).

Die erfindungsgemäße Einrichtung besteht im wesentlichen aus einem im Bereich der Zelle angeordneten Peilsystem mit mindestens zwei Peilantennen, wobei eine Peilantenne z.B. am Standort einer vorhandenen Basisstation (BTS) und die zweite in einer gewissen Entfernung angeordnet oder als mobile Meßeinheit ausgebildet ist, und einer Auswerteeinrichtung, welche einerseits die Schnittstellendaten jeder untersuchten Verbindung zwischen Mobilendgerät und Basisstation, und andererseits die Peilergebnisse des Peilsystems erfasst und auswertet. Wichtig ist, daß die Schnittstellendaten jeder untersuchten Verbindung und die Peilergebnisse mit einem exakten Zeitdatum versehen sind, um die Schnittstellendaten den entsprechenden Peilergebnissen zuordnen zu können. Anhand der Zeitdaten kann die Auswertung direkt oder zu einem späteren Zeitpunkt erfolgen.

Die durch das erfindungsgemäße Verfahren erzielbaren Vorteile sind z.B.:

- Gesprächsabbrüche, Interferenzen, Versorgungsprobleme usw. können anhand der Auswertung der Schnittstellendaten und gleichzeitigen Peilung direkt räumlich zugeordnet werden und ggf. zur Beseitigung an die Betriebskräfte weitergeleitet werden. Wird das Peilsystem als mobiles Meßsystem betrieben, können auch Interferenzen erkannt, bzw. sogar die Richtung aus der das Interferenzsignal stammt, eindeutig gepeilt werden.

- Die Erfolge einer Störungbearbeitung können unmittelbar beobachtet werden.

- es kann auf einfache Weise ein kundennaher Überblick über die Versorgung in Gebäuden (Inhouse-Versorgung) gewonnen werden.

- Die erfassten Meßwerte können statistisch bearbeitet und in Form einer bundesweiten bzw. internationalen Versorgungsdatenbank angelegt werden.

- Die gesammelten Daten können u.U. zur Verbesserung von lernfähigen Planungswerkzeugen eingesetzt werden.

- Die erfassten Positionsdaten der Mobilendgeräte lassen sich auch für andere Anwendungen nutzen, z.B. für die Verfolgung von mutmaßlichen Straftätern die mobil kommunizieren oder zur Aufdeckung von Mißbrauch des Mobilkommunikationssystems.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

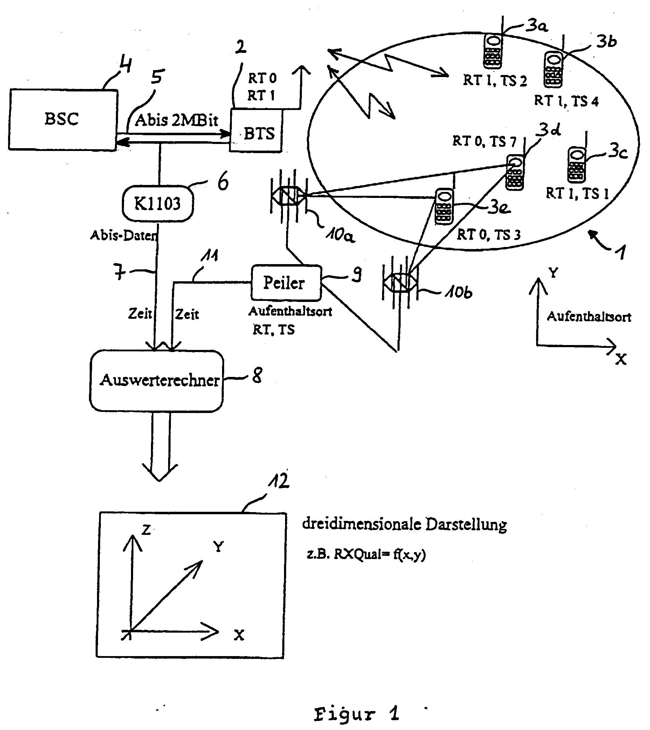

Figur 1    stellt den schematischen Aufbau des erfindungsgemäßen Meßsystems mit allen erforderlichen Einheiten am Beispiel eines GSM-Mobilkommunikationssystems dar;

Figur 2    zeigt schematisch ein Beispiel einer dreidimensionalen Darstellung der ausgewerteten Daten.

Die Versorgungsqualität einer Funkzelle 1 soll untersucht werden. Die die Funkzelle 1 versorgende Basisstation 2 kommuniziert dabei über Funkkanäle RT0, RT 1 mit einem oder mehreren Mobilendgeräten 3a-3e, die sich im Bereich der Zelle 1 aufhalten. Bei GSM-Netzen, welche nach dem TDMA-Verfahren arbeiten, ist jeder Funkkanal in mehrere Zeitschlitze TS1..TSx aufgeteilt, wobei jeder Verbindung genau ein Zeitschlitz zugeordnet ist.

Die Basisstation 2 ist über eine standardisierte, sogenannte $A_{bis}$-Schnittstelle 5, über welche bidirektional alle Signalisierungs-, Kommunikations- und Meßdaten ausgetauscht werden, mit einer zugeordneten Basisstationssteuerung 4 verbunden. Die Basisstation 2 und die Basisstationssteuerung 4 sind in der Regel örtlich voneinander getrennt, können sich aber auch beide am gleichen Ort befinden.

Im Uplink sind der $A_{bis}$-Schnittstelle unter anderem Informationen über die Qualität der Funkverbindung zwischen Mobilendgerät 3a-3e und Basisstation 2 zu entnehmen. Ein derartiges Qualitätsprotokoll enthält z.B. Aussagen über die Feldstärke, die Bitfehlerrate, einen unbeabsichtigten Verbindungsabbruch etc., der in der Basisstation empfangenen Signale. Diese Qualitätsprotokolle lassen sich mit einem Protokollanalysator 6 „herausfiltern" und weiterverarbeiten. Dabei enthält jedes Qualitätsprotokoll eine Zeitinformation über den Beginn und Ende einer Funkverbindung zwischen Basisstation 2 und den Mobilendgeräten 3a-3e und Informationen über den benutzen Funkkanal und Zeitschlitz (bei TDMA-Systemen).

Erfindungsgemäß wird der Funkzelle 1 nun ein Peilsystem 9 zugeordnet, welches entweder ortsfest im Bereich der Funkzelle installiert ist oder aber als mobile Einheit ausgebildet ist, welche die Funkzelle durchfährt.

Das Peilsystem 9 basiert auf Kreuzpeilung, so daß mindestens zwei in einem Abstand voneinander angeordnete Antennenanordnungen 10a, 10b benötigt werden, um ein genaues Peilergebnis zu erzielen.

Mit diesem Peilsystem werden nun zeitgleich mit einer Funkverbindung zwischen Mobilendgerät und Basisstation Peilungen im Uplinkfrequenzband durchgeführt. Im Beispiel werden die Mobilendgeräte 3d und 3e angepeilt, die gerade mit der Basisstation 2 kommunizieren.

Die durch die Peilung ermittelte Ortsinformation wird zusammen mit dem Zeitpunkt der Peilung erfasst und weiterverarbeitet. Weiterhin wird bei jeder Peilung der augenblicklich von der Verbindung verwendete Funkkanal RT und der zugeordnete Zeitschlitz TS festgehalten. Damit lassen sich die Peilergebnisse später eindeutig den zugehörigen Verbindungen zuordnen.

Es ist eine Auswerteeinheit 8 vorgesehen, der über eine Datenverbindung 7 die vom Protokollanalysator 6 erfassten Verbindungsprotokolle zugeführt werden. Auch die Peilergebnisse werden der Auswerteeinheit über eine Datenverbindung 11 mitgeteilt.

In der Auswerteeinheit 8 werden die Daten gespeichert und sofort oder zu einem späteren Zeitpunkt weiterverarbeitet.

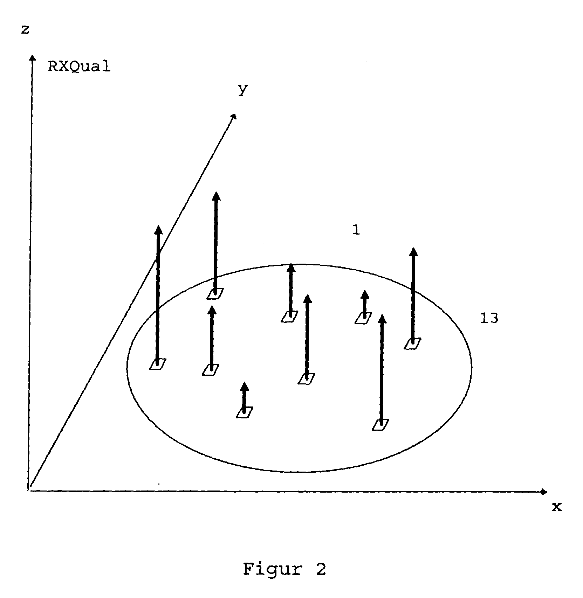

Wie insbesondere aus Figur 2 zu entnehmen ist, wird das Ergebnis der Auswertung vorzugsweise mit Hilfe einer graphischen Ausgabeeinheit 12 dreidimensional dargestellt. Es wird eine x-y-Ebene aufgespannt, welche die Fläche der untersuchten Zelle 1 darstellt. Idealerweise wird dieser Fläche eine geeignete, maßstabsgerechte digitale Rasterlandkarte unterlegt. Die Fläche ist in einzelne Flächenelemente 13 aufgeteilt, deren Größe von der Auflösung des verwendeten Peilverfahrens abhängig ist. Jedem Flächenelement 13 lassen sich die über einen Zeitraum gesammelten Peilergebnisse zuordnen, wobei dazu aus der jeweiligen, mit der Peilung zeitgleich erfassten Verbindungsprotokollierung, ein Qualitätswert $RKQual = f(x,y)$ bestimmt wird, der dem jeweiligen Flächenelement zugeordnet wird. Der Qualitätswert RXQual basiert z.B. auf den im Uplink oder Downlink ermittelten Bitfehlerraten. Die RXQual-Werte jedes untersuchten Flächenelements 13 werden in Richtung der z-Achse aufgetragen.

Bei ausreichend langer Beobachtungszeit kann davon ausgegangen werden, daß Meßwerte RXQual von nahezu dem gesamten Zellgebiet vorliegen. Es liegen damit statistisch auswertbare Qualitätsinformationen für jedes einzelne, durch die Auflösung der Peilung festgelegte Flächenelement 13 vor. Bei ausreichender Anzahl von Meßwerten ergeben sich dreidimensionale „Gebirge", anhand welcher sich die Verbindungsqualität an praktisch jedem Ort der Zelle 1 entnehmen lässt.

Zeichnungslegende

1          Funkzelle
2          Basisstation BTS
3a-3e      Mobilendgerät
4          Basisstationssteuerung BSC
5          $A_{bis}$-Schnittstelle
6          Protokollanalysator
7          Datenverbindung
8          Auswerteeinrichtung
9          Peilsystem
10a,10b    Antennenanordnung
11         Datenverbindung
12         Graphische Ausgabeeinheit
13         Flächenelement
RTx        Funkkanal Nr. x
TSx        Zeitschlitz Nr. x

**Patentansprüche**

1.  Verfahren zur räumlichen Zuordnung von Qualitätsparametern in digitalen Mobilkommunikationssystemen, **dadurch gekennzeichnet**,

    daß die in einer Funkverbindung zwischen Mobilendgeräten und Basisstationen übermittelten Signalsisierungsprotokolle erfasst werden,
    daß zeitgleich mit der Erfassung der während der Verbindung übertragenen Signalisierungsprotokolle die Standorte der beteiligten Mobilendgeräte durch Peilung ermittelt werden, wobei die Peilergebnisse zusammen mit dem Zeitpunkt der Peilungen erfasst werden,
    daß jedem erfassten Signalisierungsprotokoll das entsprechende, zeitgleich ermittelte Peilergebnis zugeordnet wird und eine quantitative und qualitative Auswertung der erfassten Daten erfolgt.

2.  Verfahren nach Anspruch 1, **dadurch gekennzeichnet**, daß die Signalisierungsprotokolle und die Peilergebnisse einer Auswerteeinrichtung zugeführt und dort abgespeichert und verarbeitet werden.

3.  Verfahren nach einem der Ansprüche 1 oder 2, **dadurch gekennzeichnet**, daß den Signalisierungprotokollen insbesondere Daten über die Qualität der jeweiligen Verbindung und andere qualitätsrelevante Ereignisse, z.B. Verbindungsabbrüche, HO-fail etc., entnommen werden.

4.  Verfahren nach einem der Ansprüche 1 bis 3, **dadurch gekennzeichnet**, daß die Signalisierungsprotokolle an einer geeigneten Schnittstelle auf der stationären Seite des Mobilkommunikationsnetzes abgegriffen werden.

5.  Verfahren nach einem der Ansprüche 1 bis 4, **dadurch gekennzeichnet**, daß die Signalisierungsprotokolle und die zugeordneten Peilergebnisse abgespeichert werden und die Auswertung der Daten sofort oder zu einem späteren Zeitpunkt erfolgt.

6.  Verfahren nach einem der Ansprüche 1 bis 5, **dadurch gekennzeichnet**, daß das Peilsystem neben der Standortinformation auch den vom angepeilten Mobilendgerät augenblicklich verwendeten Funkkanal und Zeitschlitz erfasst.

7.  Verfahren nach einem der Ansprüche 1 bis 6, **dadurch gekennzeichnet**, daß die ausgewerteten Daten graphisch und/oder kartographisch dargestellt werden.

8.  Einrichtung zur Durchführung des Verfahrens gemäß den Ansprüchen 1 bis 7, **gekennzeichnet durch** folgende Komponenten:

    ein Peilsystem (9) zur Peilung des Standortes von Mobilendgeräten (3a-3e) innerhalb einer oder mehrerer Funkzellen (1) eines Mobilkommunikationssystems,
    eine Auswerteeinrichtung (8), zur Erfassung und Auswertung von Signalisierungprotokollen von Verbindungen zwischen den angepeilten Mobilendgeräten (3a-3e) und einer Basisstation (2) der Funkzelle (1) und zur Erfassung und Auswertung der den Signalisierungsprotokollen zeitlich und gerätebezogen zugeordneten Peilergebnisse des Peilsystems (9).

9.  Einrichtung nach Anspruch 8, **dadurch gekennzeichnet**, daß das Peilsystem (9) stationär oder semi-mobil im Bereich einer oder mehrerer Funkzellen (1) angeordnet ist.

10. Einrichtung nach einem der Ansprüche 8 oder 9, **dadurch gekennzeichnet**, daß das Peilsystem (9) eine mobile Einheit ist.

11. Einrichtung nach einem der Ansprüche 8 bis 10, **dadurch gekennzeichnet**, daß das Peilsystem (9) mindestens zwei in einem Abstand voneinander angeordnete Antennenanordnungen (10a,10b) aufweist.

12. Einrichtung nach einem der Ansprüche 8 bis 11, **dadurch gekennzeichnet**, daß die Signalisierungsprotokolle durch einen Protokollanalysator (6) an einer Schnittstelle (5) auf der stationären Seite des Mobilkommunikationssystems abgegriffen werden.

13. Einrichtung nach einem der Ansprüche 1 bis 12, **dadurch gekennzeichnet**, daß die Auswerteeinrichtung (8) über leitungsgebundene und/oder leitungsungebundene Datenverbindungen (7, 11) mit dem Protokollanalysator (6) und dem Peilsystem (9) verbunden ist.

14. Einrichtung nach einem der Ansprüche 1 bis 13, **dadurch gekennzeichnet**, daß die Auswerteeinrichtung (8) über Mittel (12) zur visuellen Darstellung der erfassten Meßwerte verfügt.

Figur 1

Figur 2